# FASCICULE DE BREVET EUROPEEN

(11) **EP 1 760 113 B1**
(45) Date de publication et mention de la délivrance du brevet: **02.06.2010**
(21) Numéro de dépôt: 06300884.1
(22) Date de dépôt: 22.08.2006
(51) Int. Cl.: H01B 3/30, C08L 75/04

(54) **Câble d'énergie et/ou de télécommunication avec gaine en polyuréthane thermoplastique réticule**
Energy- or telecommunication cable with a sheath of crosslinked thermoplastic polyurethane
Energie- oder Telekommunikationskabel mit einer Hülle aus einem vernetzten thermoplastischen Polyurethan

(30) Priorité: 26.08.2005 FR 0552573
(43) Date de publication de la demande: 07.03.2007
(73) Titulaire: Nexans, 75008 Paris (FR)
(72) Inventeur: Pinto, Olivier, 69003, LYON (FR)
(74) Mandataire: Feray, Valérie

(56) Documents cités:
- FR-A- 2 565 024
- FR-A- 2 794 759
- FR-A- 2 831 542

## Description

La présente invention concerne un câble d'énergie et/ou de télécommunication doté d'au moins une gaine à base de polyuréthane thermoplastique réticulé.

L'invention trouve une application particulièrement avantageuse, mais non exclusive, dans le domaine des véhicules de transport qui utilisent quantité de câbles d'énergie et/ou de télécommunication fonctionnant dans des conditions thermiques sévères.

Certains polyuréthanes thermoplastiques sont connus pour offrir d'excellentes propriétés mécaniques, une bonne tenue chimique, ainsi qu'une résistance au vieillissement tout à fait satisfaisante. Cependant, en raison du caractère réversible de la liaison uréthane, on observe une chute significative des propriétés mécaniques de ces polymères dès lors que la température s'élève. Les polyuréthanes thermoplastiques ont alors tendance à fluer, et ce même simplement sous l'action de leur propre poids.

Pour remédier à cette difficulté, il est bien entendu possible de réticuler les polyuréthanes thermoplastiques, c'est-à-dire de créer des liaisons chimiques entre les chaînes macromoléculaires afin de renforcer la cohésion globale du réseau. La demande FR 2565024 divulgue un câble électrique ou optique difficilement inflammable qui comprend une couche externe en polyuréthane réticulé par rayonnement. On sait en effet qu'augmenter la densité de réticulation d'un polymère conduit quasi systématiquement à une amélioration des propriétés thermiques, ainsi qu'à une diminution de la perméabilité vis-à-vis des fluides et des gaz, et par conséquent à une réduction de la sensibilité à l'égard d'éventuelles agressions chimiques.

Dans le domaine de la câblerie, la réticulation d'un polyuréthane thermoplastique s'effectue généralement soit par auto-réticulation chimique, soit par irradiation électronique.

Dans le premier cas de figure, c'est-à-dire la voie purement chimique, il convient de modifier chimiquement le polymère afin qu'il puisse réticuler de lui même en quelques jours, à l'air libre et à température ambiante. Deux méthodes sont actuellement disponibles pour opérer une telle transformation, l'une consistant à greffer le polyuréthane thermoplastique avec des composés portant des fonctions isocyanates, l'autre impliquant un greffage de molécules de type silane.

Mais quelle que soit la technique employée, les propriétés thermiques atteintes par les polyuréthanes thermoplastiques ainsi réticulés demeurent aujourd'hui insuffisantes pour un certain nombre de domaines d'application très exigeants en terme de résistance à la chaleur sous contrainte mécanique, comme c'est le cas par exemple dans l'automobile. Le fait est qu'à l'heure actuelle, la tenue mécanique à haute température de tels polyuréthanes thermoplastiques réticulés ne peut être garantie que jusqu'à des températures voisines des 175°C.

La voie de réticulation physique par irradiation est quant à elle communément mise en oeuvre en exposant le polyuréthane thermoplastique à un faisceau d'électrons accélérés, et donc hautement énergétiques. Le bombardement électronique est avantageusement calibré de manière à ce que l'énergie transmise soit à même d'induire la réticulation interne du polymère, via des ruptures puis des recombinaisons de liaisons chimiques.

Ce type de réticulation présente toutefois l'inconvénient de nécessiter un équipement d'irradiation extrêmement encombrant, ce qui implique d'importantes contraintes d'installation, mais aussi un certain manque de flexibilité au niveau industriel. Un tel équipement s'avère par ailleurs particulièrement onéreux, ce qui au final rend cette solution technique tout à fait prohibitive pour de nombreuses applications.

Aussi le problème technique à résoudre, par l'objet de la présente invention, est de proposer un câble d'énergie et/ou de télécommunication qui permettrait d'éviter les problèmes de l'état de la technique en offrant notamment une tenue mécanique sensiblement améliorée à hautes températures, tout en conservant un prix de revient raisonnable.

La solution au problème technique posé consiste, selon la présente invention, en ce que le câble comporte au moins une gaine réalisée par réticulation d'une composition comprenant un polyuréthane thermoplastique, un polyisocyanate, ainsi qu'un composé réactif doté d'au moins une fonction hydroxyle et d'au moins une fonction acrylate.

Le principe utilisé pour la réalisation d'une gaine de câble conforme à l'invention consiste dans un premier temps à greffer une résine acrylique sur une chaîne polyuréthane, selon le schéma suivant:

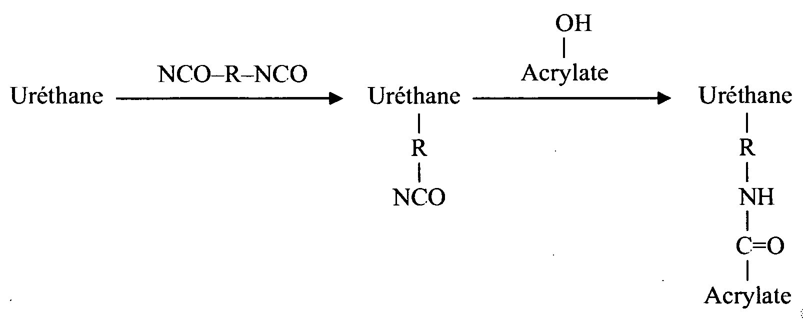

Concrètement, cela revient à greffer sélectivement un polyisocyanate le long des chaînes uréthanes, comme indiqué dans la première partie de l'équation chimique précédente. Le polyuréthane thermoplastique greffé isocyanate ainsi obtenu est alors en mesure de réagir avec un composé réactif doté d'au moins une fonction OH par l'intermédiaire d'une réaction d'addition standard, conformément à la seconde partie de l'équation chimique. Si le composé réactif en question dispose par ailleurs d'au moins un groupement réactif aux ultraviolets, notamment de type acrylate, il devient alors possible de déclencher une réaction de photoréticulation pour renforcer la cohésion du réseau polymère.

C'est ainsi que le principe utilisé pour la réalisation d'une gaine de câble conforme à l'invention, prévoit dans un second temps d'irradier le polyuréthane thermoplastique greffé avec un rayonnement ultraviolet. Cette opération, qui s'effectue de préférence en présence d'un photo-initiateur approprié, permet alors d'obtenir un polyuréthane thermoplastique réticulé aux performances thermomécaniques significativement accrues par rapport à ses homologues de l'état de la technique.

Quoi qu'il en soit, il est à noter ici que la notion de gaine concerne très généralement tout revêtement enveloppant, quelle que soit sa forme et quelle que soit sa destination. Il peut ainsi s'agir indistinctement d'une gaine isolante et/ou d'une gaine de protection.

On précise par ailleurs que de manière tout à fait classique, la locution "fonction acrylate" désigne indifféremment un groupement acrylate au sens strict du terme, ou un groupement méthacrylate.

L'invention telle qu'ainsi définie présente l'avantage de pouvoir disposer d'un câble dont chaque gaine en polyuréthane thermoplastique réticulé présente des performances à hautes températures parfaitement compatibles avec les normes les plus sévères des domaines automobile, aéronautique, ferroviaire ou robotique. Une gaine conforme à l'invention s'avère en effet particulièrement résistante à la déformation sous contrainte mécanique, et ce jusqu'à des températures élevées voisines des 200°C.

La solution proposée est par ailleurs aisée à mettre en oeuvre étant donné qu'elle ne requiert pas d'équipement lourd, notamment pour générer la réticulation de chaque gaine de polyuréthane thermoplastique. Cette opération s'effectue en effet instantanément, par réticulation sous la simple action d'un rayonnement ultraviolet. A cet égard, il faut remarquer que la lumière solaire s'avère parfaitement suffisante pour déclencher la réaction de photoréticulation. A noter que dans ce cas précis, la réaction n'est pas instantanée.

Selon une particularité de l'invention, la concentration du composé réactif dans la composition est comprise entre 0,1 et 20% en poids, et de préférence entre 1 et 10%.

Selon une autre particularité de l'invention, la composition peut également être dotée d'un photo-initiateur de la réaction de réticulation du polyuréthane thermoplastique greffé. Le rôle du photo-initiateur est bien entendu classiquement de générer des radicaux libres sous l'effet d'une exposition à un rayonnement actinique tel qu'un rayonnement ultraviolet.

De manière particulièrement avantageuse, le photo-initiateur peut notamment être choisi parmi les alpha-hydroxy cétones, les éthers d'alkyl benzoine, les ketal alkyl benzil, les oxydes d'acylphosphines, les oxydes d'aryl phosphines, la benzophénone et ses dérivés, les xanthones et leurs dérivés.

Conformément à une autre caractéristique avantageuse, la concentration du photo-initiateur dans la composition est comprise entre 0,01 et 10% en poids, et de préférence entre 1 et 5%.

Selon une autre particularité de l'invention, la composition peut en outre être pourvue d'un catalyseur de la réaction d'addition entre le polyisocyanate et le composé réactif.

De manière particulièrement avantageuse, le catalyseur est un dérivé de l'étain, du titane, une base, un acide, ou un mélange quelconque de ces composés.

De préférence, le catalyseur est du dilaurate de dibutyle étain, plus communément désigné par l'abréviation DBTL.

Conformément à une autre caractéristique avantageuse, la concentration du catalyseur dans la composition est comprise entre 0,001 et 1% en poids.

L'invention concerne également un procédé de fabrication d'une gaine de câble d'énergie et/ou de télécommunication, procédé remarquable en ce qu'il comporte les étapes consistant à:
- mélanger un polyuréthane thermoplastique, un polyisocyanate, ainsi qu'un composé réactif doté d'au moins une fonction hydroxyle et d'au moins une fonction acrylate,
- réticuler la composition préalablement mélangée par rayonnement ultraviolet.

De manière particulièrement avantageuse, le procédé de fabrication comporte en outre une étape supplémentaire qui consiste à extruder le mélange sous forme de gaine, ladite étape d'extrusion étant mise en oeuvre entre l'étape de mélange et l'étape de réticulation.

D'autres caractéristiques et avantages de la présente invention apparaîtront au cours de la description de l'exemple comparatif qui va suivre, ledit exemple étant donné à titre illustratif et nullement limitatif.

### Exemple comparatif

L'objectif est de déterminer puis de comparer les performances thermomécaniques de différents polyuréthanes thermoplastiques à même d'être utilisés pour la fabrication de gaines isolantes et/ou de protection de câbles d'énergie et/ou de télécommunication.

### Préparation des compositions

Concrètement, cinq mélanges E, F, G, H, E' sont préparés à partir de cinq formulations initiales A, B, C, D, A' qui diffèrent les unes des autres essentiellement de part la nature de la résine époxy acrylate utilisée pour greffer le polyuréthane thermoplastique de base.

Afin d'éviter toute réticulation intempestive, la réalisation des mélanges E, F, G, H, E' s'effectue en deux temps, avec préparation préalable des formulations A, B, C, D, A' intégrant chaque résine époxy acrylate, puis incorporation d'un même polyuréthane thermoplastique greffé isocyanate.

Le tableau 1 détaille précisément les différences de compositions entre les cinq formulations de base A, B, C, D, A'. A cet égard, il est à noter que les quantités mentionnées dans les différents tableaux figurés ci-après sont classiquement exprimées en parties en poids pour cent parties en poids de polyuréthane thermoplastique.

**Tableau 1**

| Formulations | A | B | C | D | A' |
|---|---|---|---|---|---|
| Estane 58888 | 100 | 100 | 100 | 100 | 100 |
| CN133 | 6 | - | - | - | 6 |
| CN152 | - | 12 | - | - | |
| SR399 | - | - | 10 | - | |
| Lucirin TPO | 2 | 2 | 2 | - | 2 |
| DBTL (ppm d'étain) | 40 | 48 | 45 | 45 | 0 |

L'Estane 58888 est un polyuréthane thermoplastique de type polyéther, qui est distribué par la société Noveon. Il est commun aux cinq échantillons, et sert notamment ici de matrice aux différents mélanges E, F, G, H, E'.

Trois types de résines rentrent dans ces compostions. Il s'agit tout d'abord du CN152, c'est-à-dire d'un époxy acrylate mono-fonctionnel commercialisé par la société Cray Valley. On trouve ensuite un époxy acrylate tri-fonctionnel, distribué sous la marque CN133 également par la société Cray Valley. On dispose enfin de SR399, en d'autres termes du dipentaérythritol penta acrylate commercialisé toujours par la société Cray Valley.

La réticulation s'opérant dans tous les cas de figure sous rayonnement ultraviolet, l'amorçage est assuré systématiquement par un photo-initiateur qui est constitué ici par un oxyde de triphénylphosphine commercialisé sous la marque Lucirin TPO par la société BASF.

La fonction catalyseur est quant à elle assurée par du DBTL, c'est-à-dire du dilaurate de dibutyle étain. Il est à noter que ses proportions sont ici exprimées exceptionnellement en ppm, en raison de l'extrême faiblesse des quantités mise en jeu.

Le tableau 2 détaille quant à lui les compositions des cinq mélanges ultimes E, F, G, H, E' qui intègrent la totalité des constituants destinés à la formation des matériaux finaux.

**Tableau 2**

| Mélanges | E | F | G | H | E' |
|---|---|---|---|---|---|
| Estane 58888 greffé | 50 | 50 | 50 | 50 | 50 |
| A | 50 | - | - | - | |
| B | - | 50 | - | - | |
| C | - | - | 50 | - | |
| D | - | - | - | 50 | |
| A' | | | | | 50 |

Comme son nom le suggère, l'Estane 58888 greffé est un dérivé greffé isocyanate du polyuréthane thermoplastique Estane 58888 précédemment décrit. Sa caractéristique est qu'il intègre 3 parties en poids de diisocyanate de diphényle méthane (MDI), ainsi que 3 parties de trimère d'isophorone diisocyanate (t-IPDI) pour 100 parties de polymère.

L'Estane 58888 greffé est destiné à réagir avec chaque type de résine choisi, et c'est pour cela qu'il est intégré dans un second temps lors de la préparation des différentes mélanges E, F, G, H, E'.

On note que l'échantillon H ne contient ni résine, ni photo-initiateur. A ce titre, il constitue l'échantillon référence de l'exemple comparatif.

### Mode opératoire

Concrètement, les différents mélanges E, F, G, H, E' étudiés dans le cadre de l'exemple comparatif sont tous préparés en suivant le même mode opératoire.

Dans chaque cas, cela débute par l'introduction du polyuréthane thermoplastique dans un mélangeur interne maintenu à 180°C. Un malaxage est alors effectué pendant 10 minutes, la température se stabilisant à 185°C. La résine est ensuite ajoutée lentement du fait de sa faible viscosité, afin de ne pas lubrifier le mélangeur. A la fin de cette opération, le photo-initiateur est incorporé dans le mélange en même temps que le catalyseur, ceci afin de tenir compte du fait que ledit catalyseur est utilisé en petite quantité et que sa viscosité est faible. Le malaxage se poursuit alors durant 15 minutes, avant que le mélange ne soit finalement retiré du mélangeur.

Dans un second temps, chaque mélange A, B, C, D, E' précédemment obtenu est réintroduit dans le mélangeur interne maintenu à 180°C, où il est malaxé durant 10 minutes. L'Estane 58888 greffé est ensuite incorporé. On considère alors que 2 minutes sont nécessaires pour obtenir une parfaite fusion du polyuréthane thermoplastique greffé isocyanate, et que 2 autres minutes sont indispensables pour parvenir à une bonne réaction entre les groupements isocyanates du polyuréthane thermoplastique et les groupements hydroxyles de la résine.

### Préparation des échantillons

Des plaques d'échantillons d'1 mm d'épaisseur sont réalisées en mettant les différents mélanges E, F, G, H, E' sous presse pendant 7 minutes, à une température 200°C et sous une pression de 100 bars. Ces plaques sont ensuite irradiées sous rayonnement ultraviolet en 1, 5, 10 et 20 passes et à une vitesse de 5 m/min, au moyen d'un convoyeur équipé d'une lampe de puissance 200W/cm de type « D » commercialisé par la société Fusion UV Systems.

### Propriétés mécaniques

Afin de vérifier qu'une véritable réticulation a bien eu lieu, il apparaît pertinent de procéder à une série de tests de fluage à chaud sous contrainte mécanique, tests qui sont communément désignés par l'anglicisme "Hot set Test" et par l'abréviation HST.

### Fluage à chaud sous contrainte mécanique à 175°C

Ce type de test est régi par la norme NF EN 60811-2-1. Il consiste concrètement à lester une extrémité d'une éprouvette de type haltère H2 avec une masse correspondant à l'application d'une contrainte équivalente à 0,2MPa, et à placer l'ensemble dans une étuve chauffée à une température de consigne donnée à +/-1°C pendant une durée de 15 minutes. Au terme de ce délai, on relève l'allongement à chaud sous contrainte de l'éprouvette, exprimé en %. La masse suspendue est alors retirée, et l'éprouvette est maintenue dans l'étuve pendant 5 nouvelles minutes. L'allongement permanent restant, également appelé rémanence, est alors mesuré avant d'être exprimé en %.

On rappelle que plus un matériau est réticulé, plus les valeurs d'allongement et de rémanence seront faibles. On précise par ailleurs que dans le cas où une éprouvette viendrait à se rompre en cours d'essai ou que son allongement serait supérieur à 100%, sous l'action conjuguée de la contrainte mécanique et de la température, le résultat au test serait alors logiquement considéré comme un échec.

Les résultats des essais de fluage à chaud hot set test à 175°C, des échantillons irradiés par 10 passages sous la lampe UV, sont consignés dans le tableau 3 ci-dessous:

**Tableau 3**

| Echantillon | E | F | H |
|---|---|---|---|
| Allongement à chaud (%) | 21 | 20 | Rupture éprouvette |
| Rémanence (%) | 8 | 12 | |

Les résultats des essais de fluage à chaud hot set test à 175°C, des échantillons irradiés par 20 passages sous la lampe UV, sont consignés dans le tableau 4 ci-dessous:

**Tableau 4**

| Echantillon | E | F | G | H | E' |
|---|---|---|---|---|---|
| Allongement à chaud (%) | 7 | 19 | 11 | Rupture éprouvette | 25 |
| Rémanence (%) | 2 | 11 | 5 | | 14 |

On observe tout d'abord que contrairement à l'échantillon témoin H, les trois échantillons E, F, G à base de résine passent avec succès le Hot Set Test à 175°C. A cet égard, il est à noter que ces bons résultats sont obtenus indépendamment du fait que l'irradiation s'opère en 10 ou 20 passes.

On remarque par ailleurs que pour un échantillon donné, plus l'irradiation est importante, plus l'allongement et la rémanence sont faibles, ce qui signifie qu'il y a vraisemblablement eu une densification du réseau réticulé.

On voit également que le catalyseur a bien joué son rôle puisque les valeurs d'allongement après test, ainsi que la rémanence, sont inférieures pour l'échantillon E à celles obtenues pour l'échantillon E'. La réaction d'addition des groupements -OH sur les groupements -NCO est donc optimisée en présence du catalyseur.Fluage à chaud sous contrainte mécanique à 200°C

Une seconde série de Hot Set Test est réalisée à une température qui est fixée cette fois à 200°C. Les résultats des essais de fluage à chaud hot set test à 200°C ,des échantillons irradiés par 20 passages sous la lampe UV, sont consignés dans le tableau 5 ci-dessous:

**Tableau 5**

| Echantillon | E | F | G | H |
|---|---|---|---|---|
| Allongement à chaud (%) | 40 | Rupture éprouvette | 50 | Rupture éprouvette |
| Rémanence (%) | 27 | | 30 | |

Les résultats des essais de fluage à chaud hot set test à 200°C des échantillons irradiés par 10 passages sous la lampe UV sont consignés dans le tableau 6 ci-dessous:

**Tableau 6**

| Echantillon | E | F | G | H |
|---|---|---|---|---|
| Allongement à chaud (%) | 52 | Rupture éprouvette | 70 | Rupture éprouvette |
| Rémanence (%) | 32 | | 30 | |

Contrairement aux échantillons F et H, les échantillons E et G passent parfaitement le HST à 200°C. Cela s'avère assez surprenant pour des polyuréthanes étant donné la fragilité de la liaison uréthane déjà évoquée précédemment, qui se matérialise par une forte tendance à s'ouvrir de la manière suivante à partir des 170°C:

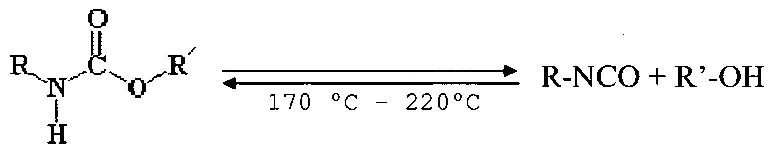

### Fluage à chaud sous contrainte mécanique à 200°C après irradiation à chaud

Afin de se placer dans des conditions plus proche de celles de l'industrie, il apparaît important de diminuer le nombre d'irradiations. Réaliser les irradiations ultraviolet à chaud permet d'atteindre cet objectif. On sait en effet que d'un point de vue thermodynamique, la réaction de réticulation est favorisée par la chaleur.

Concrètement, les échantillons E, G, H sont donc portés à une température d'environ 120°C, avant d'être irradiés uniquement 5 fois, directement en sortie d'étuve. Une troisième série de Hot Set Test est alors conduite, toujours à une température de 200°C afin de pouvoir effectuer une comparaison objective avec le test précédent.

Les résultats des essais de fluage à chaud hot set test à 200°C, des échantillons portés à 120°C puis irradiés par 5 passages sous la lampe UV, sont consignés dans le tableau 7 ci-dessous:

**Tableau 7**

| Echantillon | E | G | H |
|---|---|---|---|
| Allongement à chaud (%) | 95 | 50 | Rupture éprouvette |
| Rémanence (%) | 70 | 35 | |

Ces résultats s'avèrent particulièrement intéressants dans la mesure où ils montrent que les échantillons E et G sont capables de réussir un Hot Set Test à 200°C avec un faible niveau d'irradiations, même si cela implique en contrepartie une certaine dégradation de l'allongement et de la rémanence.

### Taux d'insolubles

Le taux d'insolubles ou taux de gel exprime la proportion de matière insoluble au sein d'un matériau. Dans le cas présent, la connaissance de ce taux permet de quantifier le niveau de réticulation du polymère correspondant, sachant que plus un matériau est réticulé, plus son taux d'insolubles est élevé et proche de 100%.

Dans la pratique, le mode opératoire est identique pour chaque mesure. Concrètement, 1g (M1) de chaque matériau est placé dans un erlenmeyer contenant 100g de tétrahydrofurane (THF), et l'ensemble est porté à reflux à une température de 55°C, sous agitation magnétique pendant une durée de 24h. Le contenu de l'erlenmeyer est ensuite filtré à chaud sur une grille métallique dont la taille des mailles est de 120µm x 120µm. Le résidu solide obtenu est alors séché dans une étuve à 80°C pendant 3 heures, puis pesé (M2). Le taux d'insolubles exprimé en % est ensuite calculé en faisant le rapport de masses M2x100/M1.

Sont testés dans le cadre de l'exemple comparatif, uniquement les matériaux ayant passé avec succès le Hot Set Test à 200°C, qu'il s'agisse des échantillons E et G irradiés 20 fois ou ceux ayant subi 5 irradiations à chaud. Le tableau 3 regroupe les résultats des différentes mesures.

**Tableau 8**

| Irradiation | Ech. | masse initiale M1 (g) | masse après test M2 (g) | taux de gel (%) |
|---|---|---|---|---|
| 20 passes | E | 1.010 | 0.936 | 93 |
| | G | 1.017 | 0.954 | 94 |
| 5 passes à chaud | E | 0.990 | 0.860 | 86 |
| | G | 1.000 | 0.960 | 96 |

Dans le cas des échantillons E et G irradiés 20 fois, le taux d'insolubles élevé illustre une réticulation très poussée pour les deux polyuréthanes thermoplastiques.

Les conclusions sont identiques en ce qui concerne les échantillons irradiés 5 fois à chaud, avec notamment un taux d'insolubles particulièrement élevé pour l'échantillon G, qui confirme pleinement les résultats obtenus par ce matériau lors du Hot Set Test à 200°C.

## Revendications

1. Câble d'énergie et/ou de télécommunication, **caractérisé en ce qu'**il comporte au moins une gaine réalisée par réticulation d'une composition comprenant un polyuréthane thermoplastique, un polyisocyanate, ainsi qu'un composé réactif doté d'au moins une fonction hydroxyle et d'au moins une fonction acrylate.

2. Câble selon la revendication 1, **caractérisé en ce que** la concentration du composé réactif dans la composition est comprise entre 0,1 et 20% en poids, et de préférence entre 1 et 10%.

3. Câble selon l'une des revendications 1 ou 2, **caractérisé en ce que** la composition comporte un photo-initiateur de la réaction de réticulation du polyuréthane thermoplastique greffé.

4. Câble selon la revendication 3, **caractérisé en ce que** le photo-initiateur est choisi parmi les alpha-hydroxy cétones, les éthers d'alkyl benzoine, les ketal alkyl benzil, les oxydes d'acylphosphines, les oxydes d'aryl phosphines, la benzophénone et ses dérivés, les xanthones et leurs dérivés.

5. Câble selon l'une des revendications 3 ou 4, **caractérisé en ce que** la concentration du photo-initiateur dans la composition est comprise entre 0,01 et 10% en poids, et de préférence entre 1 et 5%.

6. Câble selon l'une quelconque des revendications 1 à 5, **caractérisé en ce que** la composition comporte un catalyseur de la réaction d'addition entre le polyisocyanate et le composé réactif.

7. Câble selon la revendication 6, **caractérisé en ce que** le catalyseur est un dérivé de l'étain, du titane, une base, un acide, ou un mélange quelconque de ces composés.

8. Câble selon l'une des revendications 6 ou 7, **caractérisé en ce que** le catalyseur est du dilaurate de dibutyle étain.

9. Câble selon l'une quelconque des revendications 6 à 8, **caractérisé en ce que** la concentration du catalyseur dans la composition est comprise entre 0,001 et 1% en poids.

10. Procédé de fabrication d'une gaine de câble d'énergie et/ou de télécommunication, **caractérisé en ce qu'**il comporte les étapes consistant à:
- mélanger un polyuréthane thermoplastique, un polyisocyanate, ainsi qu'un composé réactif doté d'au moins une fonction hydroxyle et d'au moins une fonction acrylate,
- réticuler la composition préalablement mélangée par rayonnement ultraviolet.

11. Procédé de fabrication selon la revendication 10, **caractérisé en ce qu'**il comporte en outre une étape d'extrusion du mélange sous forme de gaine, ladite étape d'extrusion étant mise en oeuvre entre l'étape de mélange et l'étape de réticulation.

## Claims

1. A power and/or telecommunications cable, **characterized in that** it comprises at least one sheath made by cross-linking a composition comprising a thermoplastic polyurethane, a polyisocyanate, as well as a reactive compound provided with at least one hydroxyl function and at least one acrylate function.

2. The cable according to claim 1, **characterized in that** the concentration of the reactive compound in the composition is comprised between 0.1 and 20 % in weight, and preferably between 1 and 10 %.

3. The cable according to any of claims 1 or 2, **characterized in that** the composition comprises a photoinitiator of the cross-linking reaction of the grafted thermoplastic polyurethane.

4. The cable according to claim 3, **characterized in that** the photoinitiator is chosen from alpha-hydroxy ketones, benzoin alkyl ethers, benzil alkyl ketals, acylphosphine oxides, arylphosphine oxides, benzophenone and derivatives thereof, xanthones and derivatives thereof.

5. The cable according to any of claims 3 or 4, **characterized in that** the concentration of the photoinitiator in the composition is comprised between 0.01 and 10 % in weight, and preferably between 1 and 5 %.

6. The cable according to any of claims 1 to 5, **characterized in that** the composition comprises a catalyst of the addition reaction between polyisocyanate and the reactive compound.

7. The cable according to claim 6, **characterized in that** the catalyst is a derivative of tin, titanium, a base, an acid, or any mixture of such compounds.

8. The cable according to any of claims 6 or 7, **characterized in that** the catalyst is dibutyltin dilaurate.

9. The cable according to any of claims 6 to 8, **characterized in that** the concentration of the catalyst in the composition is comprised between 0.001 and 1 % in weight.

10. A method for manufacturing a sheath of a power and/or telecommunications cable, **characterized in that** it comprises the steps of:
- mixing a thermoplastic polyurethane, a polyisocyanate, as well as a reactive compound provided with at least one hydroxyl function and at least one acrylate function,
- cross-linking the premixed composition by ultraviolet radiation.

11. The manufacturing method according to claim 10, **characterized in that** it further comprises a step of extruding the mixture as a sheath, said extruding step being implemented between the mixing step and the cross-linking step.

## Patentansprüche

1. Energie- und/oder Telekommunikationskabel, **dadurch gekennzeichnet, dass** es mindestens einen Mantel umfasst, der durch Vernetzung einer Zusammensetzung ausgeführt wird, die ein thermoplastisches Polyurethan, ein Polyisocyanat sowie eine reaktionsfähige Verbindung, die mit mindestens einer Hydroxylfunktion und mindestens einer Acrylatfunktion versehen ist, umfasst.

2. Kabel nach Anspruch 1, **dadurch gekennzeichnet, dass** die Konzentration der reaktionsfähigen Verbindung in der Zusammensetzung zwischen 0,1 und 20 Gewichtsprozent und bevorzugt zwischen 1 und 10 % liegt.

3. Kabel nach einem der Ansprüche 1 oder 2, **dadurch gekennzeichnet, dass** die Zusammensetzung einen Photoinitiator der Vernetzungsreaktion des gepfropften thermoplastischen Polyurethans umfasst.

4. Kabel nach Anspruch 3, **dadurch gekennzeichnet, dass** der Photoinitiator ausgewählt wird aus Alpha-Hydroxyketonen, Benzoinalkylethern, Benzilalkylketale, Acylphosphinoxide, Arylphosphinoxide, Benzophenon und seine Derivate, Xanthone und ihre Derivate.

5. Kabel nach einem der Ansprüche 3 oder 4, **dadurch gekennzeichnet, dass** die Konzentration des Photoinitiators in der Zusammensetzung zwischen 0,01 und 10 Gewichtsprozent und bevorzugt zwischen 1 und 5 % liegt.

6. Kabel nach einem der Ansprüche 1 bis 5, **dadurch gekennzeichnet, dass** die Zusammensetzung einen Katalysator der Additionsreaktion zwischen dem Polyisocyanat und der reaktionsfähigen Verbindung umfasst.

7. Kabel nach Anspruch 6, **dadurch gekennzeichnet, dass** der Katalysator ein Derivat von Zinn, Titan, eine Base, eine Säure oder eine beliebige Mischung dieser Verbindungen ist.

8. Kabel nach einem der Ansprüche 6 oder 7, **dadurch gekennzeichnet, dass** der Katalysator Dibutyl-Zinn-Dilaurat ist.

9. Kabel nach einem der Ansprüche 6 bis 8, **dadurch gekennzeichnet, dass** die Konzentration des Katalysators in der Zusammensetzung zwischen 0,001 und 1 Gewichtsprozent liegt.

10. Verfahren zum Herstellen eines Mantels eines Energie- und/oder Telekommunikationskabels, **dadurch gekennzeichnet, dass** es folgende Schritte umfasst:
- Mischen eines thermoplastischen Polyurethans, eines Polyisocyanats, sowie einer reaktionsfähigen Verbindung, die mit mindestens einer Hydroxylfunktion und mindestens einer Acrylatfunktion versehen ist,
- Vernetzen der zuvor gemischten Zusammensetzung durch Ultraviolettbestrahlung.

11. Herstellungsverfahren nach Anspruch 10, **dadurch gekennzeichnet, dass** es ferner einen Schritt des Extrudierens der Mischung in Form eines Mantels umfasst, wobei der Extrusionsschritt zwischen dem Mischungsschritt und dem Vernetzungsschritt durchgeführt wird.
